# FASCICULE DE BREVET EUROPEEN

(11) **EP 0 796 714 B1**
(45) Date de publication et mention de la délivrance du brevet: **03.09.2003**
(21) Numéro de dépôt: 97200783.5
(22) Date de dépôt: 15.03.1997
(51) Int. Cl.: B29C 47/10

(54) **Dispositif d'injection d'un composé chimique, extrudeuse et procédés d'extrusion**
Einspritzvorrichtung für eine chemische Verbindung, Extruder und Verfahren zum Extrudieren
Injection device for a chemical compound, extruder and processes of extrusion

(30) Priorité: 18.03.1996 BE 9600239
(43) Date de publication de la demande: 24.09.1997
(73) Titulaire: SOLVAY (Société Anonyme), 1050 Bruxelles (BE)
(72) Inventeur: Gauthy, Fernand, 1780 Wemmel (BE); Bodart, Fernand, 1020 Bruxelles (BE); Marcq, Jean-Paul, 1850 Grimbergen (BE); Jacques, Alain, 5140 Sombreffe (BE)
(74) Mandataire: Jacques, Philippe

(56) Documents cités:
- EP-A- 0 095 287
- DE-A- 1 554 773
- DE-A- 3 235 145
- US-A- 3 461 498

## Description

La présente invention a pour objet un dispositif d'injection pour extrudeuse.

Il est connu de modifier les propriétés physiques et/ou chimiques de matériaux à extruder en les mélangeant lors de l'extrusion avec au moins un composé chimique.

Cette extrusion dite "réactive" consiste à utiliser des dispositifs bien connus d'extrusion de matériaux à extruder à l'état fondu, appelés ci-après plus simplement extrudeuses, pour en modifier la composition chimique ou la structure.

Les matériaux à extruder peuvent être mélangés, par exemple, dans la trémie d'alimentation de l'extrudeuse ou dans un dispositif mélangeur situé en amont de la trémie, à un ou plusieurs composés chimiques avec lesquels les matériaux à extruder réagissent dans les conditions de température et de pression prévalant dans le corps de l'extrudeuse.

Ces techniques donnent des résultats acceptables lorsque les composés chimiques mélangés aux matériaux à extruder sont des solides. Cependant lorsque les composés sont sous forme liquide, leur incorporation dans le matériau à extruder engendre souvent des problèmes dus à la distribution hétérogène des composés dans le matériau. Ces problèmes sont de même rencontrés lorsque les composés sont pulvérisés sur le matériau à extruder, et notamment dans les cas où le mélange obtenu est collant et forme des agglomérats hétérogènes. Dans ces cas-ci, le coulage du matériau à extruder est compromis et l'alimentation de l'extrudeuse se fait par à-coups et non de manière continue. La concentration des composés chimiques introduits n'est pas uniforme dans le matériau à extruder, les propriétés recherchées ne sont pas obtenues et le fonctionnement de l'extrudeuse peut être perturbé.

Lorsque, pour des raisons de sécurité ou de protection de l'environnement, les composés chimiques doivent être incorporés au matériau à extruder sous atmosphère inerte, des problèmes supplémentaires se posent.

Dans un tel cas, les dispositifs de mélange externes, utilisés pour pulvériser les composés chimiques liquides sur le matériau à extruder, comprennent des tubulures pour l'injection de gaz inerte et doivent généralement être confinés dans une enceinte volumineuse afin d'éviter une pollution de l'environnement par des effluents gazeux résultant du contact du composé chimique avec le matériau à extruder.

Le brevet US 3,461,498 décrit un dispositif qui permet d'injecter un fluide sous pression dans une extrudeuse contenant une matière plastique également sous pression et ce au moyen d'une buse d'injection de géométrie donnée. Ce type de dispositif convient bien pour injecter des quantités élevées (et donc, des débits élevés) d'additifs tels que des agents d'expansion par exemple. Toutefois, ce type de dispositif ne permet pas de doser, de manière homogène, des faibles quantités d'additifs telles que celles généralement requises dans le cas de catalyseurs, agents modifiants etc.

Le brevet EP O 095 287 concerne le moussage de matières thermoplastiques, d'adhésifs thermofusibles par exemple, et décrit un dispositif comprenant une tige creuse fixée dans un corps allongé de façon à mélanger l'adhésif à de l'eau et à un gaz porteur. Dans ce dispositif le mélange se fait au niveau de la sortie du corps allongé.

Un des buts de la présente invention est de proposer un dispositif permettant d'incorporer de manière homogène un composé chimique dans un matériau à extruder.

A cet effet, on propose, selon un aspect de la présente invention, un dispositif d'injection d'un composé chimique selon la revendication 1.

Un avantage de ce dispositif est qu'il permet d'incorporer de manière homogène un composé chimique dans un matériau à extruder. Un autre avantage de ce dispositif est qu'il permet d'introduire de faibles quantités de composé chimique dans un matériau à extruder. Le débit du composé chimique peut être maintenu constant et ce, même lorsque les débits sont particulièrement faibles.

Ce dispositif est particulièrement bien adapté pour injecter des composés chimiques gazeux, liquides ou fluidifiés.

Ledit deuxième canal a de préférence une section constante.

Le fluide introduit par le deuxième canal peut être un gaz porteur inerte. Ce fluide s'écoule dans l'espace aménagé entre les parois du deuxième canal et les parois externes de la tige creuse. Les deux fluides sont intimement mélangés dans la chambre de mélange située en amont de ladite buse d'injection, avant d'être injectés dans l'extrudeuse.

La longueur de la tige creuse est dimensionnée de façon à laisser un espace entre la buse d'injection du dispositif et l'orifice de sortie de la tige creuse pour former une chambre de mélange.

La tige creuse peut comprendre un dispositif de centrage, aménagé près de l'extrémité portant l'orifice de sortie, permettant le centrage précis de la tige creuse à l'intérieur dudit deuxième canal.

Ces moyens de centrage peuvent p.ex. comprendre une bague de centrage concentrique à la tige creuse dont le diamètre est égal à celui du canal. La bague concentrique est de préférence solidaire avec la tige creuse. Cette bague présente, de préférence une ou plusieurs rainures parallèles à l'axe longitudinal de la tige creuse ou des orifices devant permettre le passage du fluide à travers ledit deuxième canal du dispositif.

Le moyen de fixation du corps allongé et de la tige creuse peut être n'importe quel moyen permettant d'assurer le maintien de ces éléments l'un dans l'autre, de préférence de manière amovible afin de pouvoir inspecter, entretenir ou réparer le dispositif de pulvérisation ou encore en remplacer des éléments.

On propose également, selon un autre aspect de la présente invention, une extrudeuse selon la revendication 3.

Le dispositif selon l'invention peut équiper tout type d'extrudeuse. Par extrudeuse, on entend désigner tout dispositif continu comprenant une zone d'alimentation et, à sa sortie, une zone d'évacuation précédée d'une zone de compression, cette dernière forçant la masse fondue à passer au travers de la zone d'évacuation.

L'extrudeuse peut comprendre notamment les parties suivantes :
I. au moins une trémie d'alimentation à l'entrée de l'extrudeuse,
II. un ou plusieurs éléments de vis permettant la propagation du matériau à extruder,
III. éventuellement un ou plusieurs éléments malaxeurs permettant le mélange du matériau à extruder, les éléments de vis et les éléments malaxeurs pouvant éventuellement s'alterner,
IV. une ou plusieurs zones d'échauffement permettant la fusion du matériau à extruder,
V. à la sortie, une zone de compression suivie d'une zone d'évacuation, la zone de compression ayant pour fonction de compresser la matière à extruder afin de la forcer au travers de la zone d'évacuation de l'extrudeuse,

Les parties (I) à (V) ne sont pas nécessairement disposées dans cet ordre.

La zone d'évacuation de l'extrudeuse peut être suivie d'un dispositif de granulation ou d'un dispositif donnant à la matière extrudée une forme profilée tel un film.

Les extrudeuses pouvant convenir sont notamment les extrudeuses du type monovis, les extrudeuses du type co-malaxeur telles que par exemple les extrudeuses commercialisées par la société BUSS, les extrudeuses du type bi-vis co-rotatives interpénétrées ou non intezpénétrées telles que commercialisées par exemple par la société WERNER & PFLEIDERER, les extrudeuses du type bi-vis contrarotatives interpénétrées ou non interpénétrées et les extrudeuses du type multi-vis. On utilise de préférence une extrudeuse du type co-malaxeur ou du type bi-vis co-rotatives interpénétrées.

Une extrudeuse peut comprendre un ou plusieurs dispositifs d'injection qui permettent d'introduire simultanément ou séparément un ou plusieurs composés chimiques dans le flux de matériau à extruder.

L'extrudeuse peut également contenir, de préférence après la zone (IV), une zone de dégazage afin d'éliminer les quantités excessives de composés chimiques n'ayant pas réagi et éventuellement les sous-produits générés lors de l'extrusion.

Le dispositif d'injection est, de préférence, disposé perpendiculairement au fourreau de l'extrudeuse via un orifice de manière que la buse d'injection du dispositif d'injection débouche tangentiellement au filet de la vis d'extrusion. Cette disposition avantageuse permet un auto-nettoyage de la buse d'injection.

Avantageusement, le dispositif d'injection est disposé en amont de la zone où le matériau à extruder est fondu pour éviter les risques de bouchage de la buse d'injection. En effet, lorsque le dispositif d'injection est installé dans cette zone, du matériau à extruder fondu risque de s'introduire dans la buse d'injection et de boucher cette dernière. Ce risque peut être minimisé soit en plaçant le dispositif d'injection en amont de cette zone soit en injectant en continu un fluide dans l'extrudeuse. Dans le cas où aucun composé réactif n'est requis, on peut, pour éviter le bouchage de la buse d'injection, injecter en continu un produit inerte dans l'extrudeuse via le dispositif d'injection, de façon à maintenir la buse d'injection dégagée.

Une telle extrudeuse est particulièrement intéressante pour la compatibilisation de polymères et leur modification. Elle convient par exemple bien pour la modification chimique des polyoléfines et en particulier du polypropylène.

Selon un autre aspect de la présente invention, on propose également un procédé d'extrusion d'un matériau polymérique au moyen de l'extrudeuse décrite ci-avant, dans lequel on effectue les étapes suivantes :
- introduire un matériau polymérique dans l'extrudeuse,
- injecter un composé chimique dans la tige creuse munie du premier canal,
- injecter un fluide dans le deuxième canal,
- mélanger ledit composé chimique et ledit fluide dans la chambre de mélange,
- introduire le mélange ainsi obtenu à l'intérieur de ladite extrudeuse, et
- extruder ledit matériau polymérique ensemble avec ledit mélange.

Selon encore un autre aspect de la présente invention, on propose également un procédé de modification d'un matériau polymérique par extrusion réactive au moyen de l'extrudeuse décrite ci-avant dans lequel on effectue les étapes suivantes :
- introduire un matériau polymérique dans l'extrudeuse,
- injecter un composé chimique dans la tige creuse munie du premier canal,
- injecter un fluide dans le deuxième canal,
- mélanger ledit composé chimique et ledit fluide dans la chambre de mélange,
- introduire le mélange ainsi obtenu à l'intérieur de ladite extrudeuse, et
- extruder ledit matériau polymérique ensemble avec ledit mélange dans des conditions permettant une réaction entre ledit composé chimique et ledit matériau polymérique.

Le mélange dudit composé chimique et dudit fluide est, de préférence, injecté perpendiculairement au fourreau de l'extrudeuse et tangentiellement au filet de la vis via un orifice pratiqué dans le fourreau dé l'extrudeuse de manière que la buse d'injection du dispositif d'injection débouche tangentiellement au filet de la vis d'extrusion. Cette disposition avantageuse permet un auto-nettoyage de la buse d'injection.

Le matériau polymérique peut comprendre un mélange de plusieurs polymères ou un mélange de polymères, d'oligomères et/ou de monomères.

Un tel procédé d'extrusion est particulièrement intéressant pour l'extrusion de polymères tel que décrit par exemple dans la demande de brevet européen EP 0 601 635.

Selon un autre aspect de la présente invention, on propose également un procédé de synthèse en extrudeuse d'un matériau polymérique au moyen d'une extrudeuse telle que décrite ci-avant dans lequel on effectue les étapes suivantes :
- introduire un matériau à polymériser dans l'extrudeuse,
- injecter un amorceur chimique dans la tige creuse munie du premier canal,
- injecter un fluide dans le deuxième canal,
- mélanger ledit amorceur chimique et ledit fluide dans la chambre de mélange,
- introduire le mélange ainsi obtenu à l'intérieur de ladite extrudeuse, et
- polymériser ledit matériau à polymériser dans des conditions permettant une réaction entre ledit amorceur chimique et ledit matériau à polymériser et
- extruder ledit matériau polymérique ainsi formé.

Un tel procédé de polymérisation est particulièrement intéressant pour la fabrication de poly-ε-caprolactones par polymérisation continue de ε-caprolactones en masse fondue dans une extrudeuse à l'intervention d'alkoxydes d'aluminium et tout particulièrement d'alkoxydes d'aluminium liquides.

Un mode de réalisation avantageux du dispositif d'injection est décrit plus en détail à titre d'illustration en relation avec les figures dans lesquelles :
la Fig. 1 représente une vue en coupe du premier canal du dispositif d'injection
la Fig. 2 représente une coupe selon A-B de la Fig. 1,
la Fig. 3 représente une vue en coupe du corps allongé du dispositif d'injection,
la Fig. 4 représente une vue en coupe du dispositif de fixation.

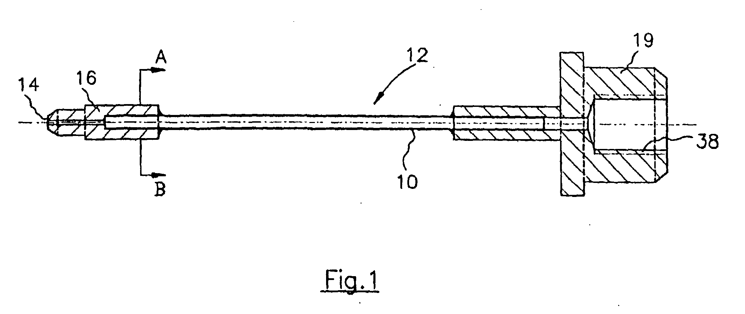

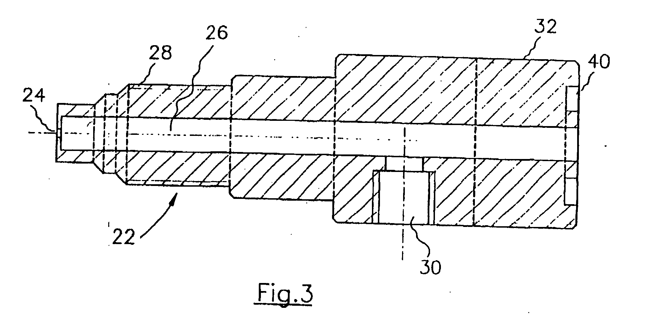

La Fig. 1 représente une tige creuse 12 comprenant un premier canal 10 dans lequel circule le composé chimique . A une extrémité, la tige creuse 12 comporte un orifice de sortie 14. A l'extrémité opposée à l'orifice 14 est montée une bague de positionnement 19 qui permet de positionner la tige creuse 12 à l'intérieur du deuxième canal représenté à la Fig. 3.

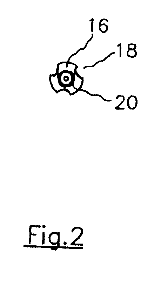

La Fig. 2 montre une coupe selon la ligne A-B de la Fig.1 à travers une bague de centrage 16 montée sur la tige creuse à proximité de l'orifice 14. Cette bague de centrage 16 permet de positionner avec précision l'extrémité libre de la tige creuse 12 à l'intérieur du deuxième canal. Sur le pourtour extérieur de la bague de centrage 16, on voit des rainures 18 longitudinales qui permettent la circulation d'un fluide à l'extérieur de la tige creuse 12. La lumière de la tige creuse 12 est désignée par la référence 20.

La Fig. 3 représente une vue en coupe du corps allongé du dispositif d'injection.

Le corps allongé 22 comprend, parallèlement à son axe longitudinal, un deuxième canal 26 et à l'une de ses extrémités, une buse d'injection 24 pour l'injection du composé chimique dans une extrudeuse (non représentée). Le corps allongé 22 du dispositif d'injection est monté de préférence perpendiculairement au sommet des filets des vis d'une extrudeuse p.ex d'une extrudeuse du type bi-vis co-rotatives interpénétrées. Le corps allongé 22 comprend une série de sections cylindriques et tronconiques dont une est munie d'un filet 28. Le pas de vis du filet 28 correspond à celui d'un orifice aménagé dans le fourreau de l'extrudeuse destiné à recevoir le dispositif d'injection. Pour faciliter le montage du corps allongé 22, cet orifice est de préférence l'un de ceux destinés conventionnellement à recevoir une jauge de pression connue, par exemple du type DYNISCO®.

Le corps allongé 22 comprend un orifice 30 pratiqué dans la paroi latérale du corps allongé 22 qui débouche dans le canal 26. Cet orifice 30 permet d'introduire un gaz inerte dans le canal 26.

La tige creuse 12 peut être introduite à l'intérieur du canal 26 du corps allongé 22 par l'extrémité opposée à la buse d'injection 24. Entre l'orifice de sortie 14 de la tige creuse 12 et la buse d'injection 24 du corps allongé 22 est aménagée une chambre de mélange dans laquelle le composé chimique issu de la tige creuse 12 et le gaz inerte introduit dans le deuxième canal 26 via l'orifice 30 sont mélangés intimement avant d'être injectés via la buse d'injection 24 dans le matériau à extruder progressant dans l'extrudeuse.

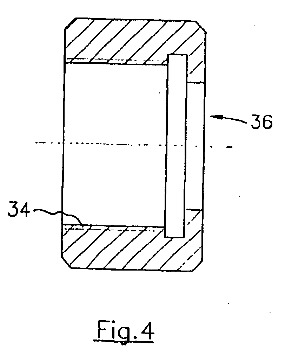

Le corps allongé 22 comporte à l'extrémité opposée à la buse d'injection 24 un filet mâle 32 correspondant au filet femelle 34 de la bague de fixation 36 représentée à la Fig. 4. Cette bague 36 assuré la fixation du corps allongé 22 et de la tige creuse 12. Cette bague 36 peut être par exemple un écrou moleté dont le filet intérieur correspond au filet femelle 34.

Le corps allongé 22 comprend également un siège 40 pour un joint p.ex. un joint torique qui assure l'étanchéité du corps allongé 22 par rapport à la bague de positionnement 19 de la tige creuse 12.

L'introduction, de manière étanche, du composé chimique dans la tige creuse 12 est assurée par un dispositif d'amenée (non représenté) dont l'extrémité filetée correspond au filet femelle 38 de l'extrémité de la tige creuse 12.

Le corps allongé 22 du dispositif d'injection est disposé de préférence perpendiculairement au fourreau de l'extrudeuse, de manière que la buse d'injection 24 débouche, via un orifice pratiqué dans ce fourreau, tangentiellement au filet de la ou des vis d'extrusion. Cette disposition est avantageuse parce qu'elle permet un auto-nettoyage de la buse de pulvérisation.

Par ailleurs, le corps allongé 22 est disposé de préférence à un endroit de l'extrudeuse situé en amont de la zone où le matériau à extruder est fondu pour éviter les risques de bouchage de la buse.

La bague de fixation 36 du corps allongé 22 et de la tige creuse 12 ne doit pas nécessairement être une bague mais peut être n'importe quel moyen permettant d'assurer le maintien de ces éléments l'un dans l'autre, de préférence de manière amovible, pour pouvoir inspecter, entretenir ou réparer le dispositif d'injection ou encore en remplacer des éléments.

## Revendications

1. Dispositif d'injection d'un composé chimique comprenant
- une tige creuse (12) munie d'un premier canal (10) et comportant un orifice de sortie (14) aménagé à une extrémité,
- un corps allongé (22) dans lequel est aménagé, parallèlement à son axe longitudinal, un deuxième canal (26) muni d'une buse d'injection (24) aménagée à une de ses extrémités et d'un orifice (30), aménagé de préférence latéralement, permettant d'introduire un fluide dans le deuxième canal (26),
- un moyen de fixation du corps allongé et de la tige creuse (36),
ladite tige creuse (12) munie d'un premier canal (10) pouvant être introduite à l'intérieur dudit deuxième canal (26) par l'extrémité opposée à ladite buse d'injection (24), de façon à laisser un espace entre la buse d'injection (24) et l'orifice de sortie (14) pour former une chambre de mélange et étant munie d'une bague de positionnement (19) fixée à l'extrémité de la tige creuse opposée audit orifice de sortie (14), permettant de positionner axialement la tige creuse (12) à l'intérieur du deuxième canal (26) de façon à maintenir un espacement radial entre la tige creuse (12) et le deuxième canal (26).

2. Dispositif d'injection selon la revendication 1, **caractérisé en ce que** la tige creuse (12) comprend un dispositif de centrage (16), aménagé près de l'extrémité portant l'orifice de sortie (14), permettant le centrage précis de la tige creuse (12) à l'intérieur dudit deuxième canal (26).

3. Extrudeuse comprenant une zone d'alimentation, une zone de compression et une zone d'évacuation, équipée d'un dispositif d'injection selon la revendication 1 ou 2.

4. Extrudeuse selon la revendication 3, comprenant une vis d'extrusion et un fourreau, dans laquelle le dispositif d'injection est disposé perpendiculairement au fourreau de l'extrudeuse de manière que la buse d'injection (24) du dispositif d'injection débouche tangentiellement au filet de la vis d'extrusion.

5. Extrudeuse selon la revendication 3 ou 4, dans laquelle le dispositif d'injection est disposé en amont de la zone où le matériau à extruder est fondu.

6. Procédé d'extrusion d'un matériau polymérique au moyen d'une extrudeuse selon l'une quelconque des revendications 3 à 5, dans lequel on effectue les étapes suivantes :
- introduire un matériau polymérique dans l'extrudeuse,
- injecter un composé chimique dans la tige creuse (12) munie du premier canal (10),
- injecter un fluide dans le deuxième canal (26),
- mélanger ledit composé chimique et ledit fluide dans la chambre de mélange,
- introduire le mélange ainsi obtenu à l'intérieur de ladite extrudeuse, et
- extruder ledit matériau polymérique ensemble avec ledit mélange.

7. Procédé de modification d'un matériau polymérique par extrusion réactive au moyen d'une extrudeuse selon l'une quelconque des revendications 3 à 5, dans lequel on effectue les étapes suivantes :
- introduire un matériau polymérique dans l'extrudeuse,
- injecter un composé chimique dans la tige creuse (12) munie du premier canal (10),
- injecter un fluide dans le deuxième canal (26),
- mélanger ledit composé chimique et ledit fluide dans la chambre de mélange,
- introduire le mélange ainsi obtenu à l'intérieur de ladite extrudeuse, et
- extruder ledit matériau polymérique ensemble avec ledit mélange dans des conditions permettant une réaction entre ledit composé chimique et ledit matériau polymérique.

8. Procédé de synthèse en extrudeuse d'un matériau polymérique au moyen d'une extrudeuse selon l'une quelconque des revendications 3 à 5, dans lequel on effectue les étapes suivantes
- introduire un matériau à polymériser dans l'extrudeuse,
- injecter un amorceur chimique dans la tige creuse (12) munie d'un premier canal (10),
- injecter un fluide dans le deuxième canal (26),
- mélanger ledit amorceur chimique et ledit fluide dans la chambre de mélange,
- introduire le mélange ainsi obtenu à l'intérieur de ladite extrudeuse, et
- polymériser ledit matériau à polymériser dans des conditions permettant une réaction entre ledit composé chimique et ledit matériau à polymériser et extruder ledit matériau polymérique ainsi formé.

## Patentansprüche

1. Vorrichtung zum Einspritzen einer chemischen Zusammensetzung, mit:
- einer Hohlstange (12), die mit einem ersten Kanal (10) versehen ist und an einem Ende eine Austrittsöffnung (14) aufweist,
- einem langgestreckten Körper (22) in dem parallel zu seiner Längsachse ein zweiter Kanal (26) ausgebildet ist, der an einem seiner Enden mit einer Einspritzdüse (24) versehen ist und eine Öffnung (30) aufweist, die vorzugsweise seitlich ausmündet, wobei sie das Einbringen von Fluid in den zweiten Kanal (26) gestattet;
- einem Mittel (36) zum Verbinden des langgestreckten Körpers und der Hohlstange, wobei die mit dem ersten Kanal (10) versehene Hohlstange (12) in das Innere des zweiten Kanals (26) von dem der Einspritzdüse (24) entgegengesetzten Ende her eingeführt werden kann, derart, daß zwischen der Einspritzdüse (24) und der Austrittsöffnung (14) ein Raum verbleibt, um eine Mischkammer zu bilden, und die Hohlstange mit einem Positionierring (19) versehen ist, der an dem der Austrittsöffnung (14) gegenüberliegenden Ende der Hohlstange vorgesehen ist und eine Axialpositionierung der Hohlstange (12) im Inneren des zweiten Kanals (26) gestattet, so daß ein Radialraum zwischen der Hohlstange (12) und dem zweiten Kanal (26) aufrechterhalten wird.

2. Vorrichtung nach Anspruch 1, **dadurch gekennzeichnet, daß** die Hohlstange (12) eine Zentriereinrichtung (16) aufweist, die nahe dem die Austrittsöffnung (14) aufweisenden Ende vorgesehen ist und eine präzise Zentrierung der Hohlstange (12) im Inneren des zweiten Kanals (26) gestattet.

3. Extruder mit einer Einbringzone, einer Druckzone und einer Austragzone, der mit einer Einspritzvorrichtung nach den Ansprüchen 1 und 2 versehen ist.

4. Extruder nach Anspruch 3, mit einer Extruderschnecke und ein Schneckengehäuse, wobei die Einspritzvorrichtung senkrecht zum Gehäuse angeordnet ist, derart, daß die Einspritzdüse (24) der Einspritzvorrichtung auf die Gänge der Extruderschnecke tangential ausmündet.

5. Extruder nach Anspruch 3 oder 4, bei welchem die Einspritzvorrichtung stromaufwärts der Zone angeordnet ist, in welcher das zu extrudierende Material geschmolzen wird.

6. Verfahren zum Extrudieren eines Polymermaterials mit Hilfe eines Extruders nach einem der Ansprüche 3 bis 5, bei welchem folgende Schritte ausgeführt werden:
- Einbringen eines Polymermaterials in den Extruder,
- Einspritzen einer chemischen Zusammensetzung in die mit dem ersten Kanal (10) versehene Hohlstange (12),
- Einspritzen eines Fluid in den zweiten Kanal (26)
- Mischen der chemischen Zusammensetzung und des Fluids in der Mischkammer;
- Einbringen des so erhaltenen Gemisches in den Extruder und
- Extrudieren des Polymermaterials gemeinsam mit dem Gemisch.

7. Verfahren zum Modifizieren eines Polymermaterials durch reaktive Extrusion mit Hilfe eines Extruders nach einem der Ansprüche 3 bis 5, bei welchem man folgende Schritte ausführt:
- Einbringen eines Polymermaterials in einen Extruder,
- Einspritzen einer chemischen Zusammensetzung in die mit dem ersten Kanal (10) versehene Hohlstange (12),
- Einspritzen eines Fluids in den zweiten Kanal (26),
- Mischen der chemischen Zusammensetzung und des Fluids in der Mischkammer,
- Einbringen des so erhaltenen Gemisches in das Innere des Extruders, und
- Extrudieren des Polymermaterials mit dem Gemisch unter Bedingungen, die eine Reaktion zwischen der chemischen Mischung und dem Polymermaterial gestatten.

8. Syntheseverfahren zum Extrudieren eines Polymermaterials mit Hilfe eines Extruders nach einem der Ansprüche 3 bis 5, bei welchem man folgende Schritte ausführt:
- Einbringen eines Polymermaterials in einen Extruder,
- Einspritzen einer chemischen Zusammensetzung in die mit dem ersten Kanal (10) versehene Hohlstange (12),
- Einspritzen eines Fluids in den zweiten Kanal (26),
- Mischen der reaktiven chemischen Zusammensetzung und des Fluids in der Mischkammer,
- Einbringen des so erhaltenen Gemisches in das Innere des Extruders, und
- Polymerisieren des polymerisierbaren Materials unter Bedingungen, die eine Reaktion zwischen der chemischen Zusammensetzung und dem polymerisierbaren Material gestatten, und Extrudieren des so gebildeten Polymermaterials .

## Claims

1. Device for injecting a chemical compound, comprising:
- a hollow rod (12) provided with a first channel (10) and having an output orifice (14) placed at one end;
- an elongate body (22) in which is placed, parallel to its longitudinal axis, a second channel (26) provided with an injection nozzle (24) placed at one of its ends and with an orifice (30), preferably placed laterally, allowing a fluid to be introduced into the second channel (26);
- a means of fastening the elongate body and the hollow rod (36),
it being possible for the said hollow rod (12) provided with a first channel (10) to be introduced into the said second channel (26) via the opposite end from that with the said injection nozzle (24), so as to leave a space between the injection nozzle (24) and the output orifice (14) in order to form a mixing chamber and being provided with a positioning ring (19) fastened to the opposite end of the hollow rod from that with the said output orifice (14), allowing the hollow rod (12) to be positioned axially inside the second channel (26) so as to maintain a radial spacing between the hollow rod (12) and the second channel (26).

2. Injection device according to Claim 1, **characterized in that** the hollow rod (12) includes a centring device (16), placed close to the end having the output orifice (14), allowing the hollow rod (12) to be precisely centred inside the said second channel (26).

3. Extruder comprising a feed zone, a compression zone and a discharge zone, equipped with an injection device according to Claim 1 or 2.

4. Extruder according to Claim 3, comprising an extrusion screw and a barrel, in which the injection device is placed perpendicular to the barrel of the extruder so that the injection nozzle (24) of the injection device emerges tangentially to the flights of the extrusion screw.

5. Extruder according to Claim 3 or 4, in which the injection device is placed upstream of the zone in which the material to be extruded is melted.

6. Process for extruding a polymeric material by means of an extruder according to any one of Claims 3 to 5, in which the following steps are carried out:
- a polymeric material is introduced into the extruder;
- a chemical compound is injected into the hollow rod (12) provided with the first channel (10);
- a fluid is injected into the second channel (26);
- the said chemical compound and the said fluid are mixed in the mixing chamber;
- the mixture thus obtained is introduced into the said extruder; and
- the said polymeric material is extruded together with the said mixture.

7. Process for modifying a polymeric material by reactive extrusion by means of an extruder according to any one of Claims 3 to 5, in which the following steps are carried out:
- a polymeric material is introduced into the extruder;
- a chemical compound is injected into the hollow rod (12) provided with the first channel (10);
- a fluid is injected into the second channel (26);
- the said chemical compound and the said fluid are mixed in the mixing chamber;
- the mixture thus obtained is introduced into the said extruder; and
- the said polymeric material is extruded together with the said mixture under conditions allowing a reaction between the said chemical compound and the said polymeric material.

8. Extruder process for synthesizing a polymeric material by means of an extruder according to any one of Claims 3 to 5, in which the following steps are carried out:
- a polymeric material is introduced into the extruder;
- a chemical initiator is injected into the hollow rod (12) provided with a first channel (10);
- a fluid is injected into the second channel (26) ;
- the said chemical initiator and the said fluid are mixed in the mixing chamber;
- the mixture thus obtained is introduced into the said extruder; and
- the said material to be cured is cured under conditions allowing a reaction between the said chemical compound and the said material to be cured, and the said polymeric material thus formed is extruded.
